# EUROPEAN PATENT APPLICATION

(11) **EP 1 128 634 A2**
(43) Date of publication of application: **29.08.2001**
(21) Application number: 01301859.3
(22) Date of filing: 28.02.2001
(51) Int. Cl.: H04L 29/06, G07F 17/30, H04Q 7/22

(54) **Client server system and communication method thereof**

(30) Priority: 28.02.2000 JP 2000052022; 20.10.2000 JP 2000320329
(71) Applicant: Kizna.com Inc., Delaware 19801 (US)
(72) Inventor: Miyazawa, Takeo, Mitaka-shi, Tokyo 181-0013 (JP); Okada, Tetsuya, Tokyo 166-0003 (JP)
(74) Representative: Brown, Kenneth Richard

(57) **Abstract**

The present invention provides a client server system whereby a message exchange can be easily executed between a client, such as a personal computer, and an Internet portable telephone. The client server system comprises a server, a plurality of clients connected to the server via communication lines, and a gateway which converts the information of the server to an interface suitable for an Internet portable telephone.

## Description

### BACKGROUND OF THE INVENTION

### 1. Field of the Invention

The present invention relates to a client server system comprising a server, a plurality of clients connected to the server via communication lines, and an Internet portable telephone connected to the server via a gateway, wherein messages can be easily exchanged using icons.

### 2. Description of the Related Art

Electronic mail is widely known as a typical message exchange means in a client server system.

In conventional electronic mail, an address must be input using an address book or by another means. This operation is not graphical. Most user interfaces of current computers, however, are graphical, are easy to understand, and have good operability, like the case of dragging and dropping an icon. For a message exchange means as well, a graphical user interface with superb operability is demanded.

Recently, portable telephones with Internet access functions appeared, and use is spreading rapidly. In the following description, this type of portable telephone is called an " Internet portable telephone".

The Internet portable telephone will now be briefly described. Unlike a conventional portable telephone, an Internet portable telephone allows not only voice calls but also convenient access to online services, including checking bank account balances and bank transfer information, restaurant guides, andtelephone directory searches. Also via the Internet, electronic mail can be sent/received, and home pages supported by the Internet portable telephone can be viewed on this portable telephone itself.

The major features are as follows.
- In addition to "voicecalls" using the portable telephone, many sites on the Internet can be accessed merely by using the keys of the Internet portable telephone. Services available with the Internet portable telephone are expanding in quick succession to makelifeeasier, including mobilebanking, ticketreservations, news flashes and restaurant searches.
- The data communication system of the Internet portable telephone is packet communication (9600 bps), where a fee is charged which is not based on communication time but on the data volume transmitted or received. So the user can take time to view information without concern for communication time.
- Internet portable telephone mail can be exchanged not only between Internet portable telephones but also over the Internet, so mail can be sent/received over the Internet even from outside homes. Because of the packet communication system, the fee for a short e-mail can be sent/received for 1 - 3 Yen.

The screen of the Internet portable telephone corresponds to the small screen of a personal computer. So the user can connect the telephone to the Internet and to various information services, and can access desired information anytime and anywhere.

The major services provided by the Internet portabletelephone are as follows.
- Internet portable telephone message service

If message reception is requested from a site where Internet portable telephone message services are provided, the desired information is automatically sent to the portable telephone. For example, such information services as news flashes and weather forecasts can be received without concern for the communication time.
- Internet portable telephone mail service

Mail can be exchanged not only between Internet portable phones but Internet mail can also be exchanged. In the case of the Internet portable telephone, the portable telephone number of the Internet portable telephone becomes the electronic mail address.
- Internet portable telephone Internet browsing

The Internet portable telephone allows viewing Internet home pages created for Internet portable telephones. Not only sites which provide commercial services for Internet portable telephones, but also personally created Internet portable telephone-supported home pages can also be viewed via the Internet portable telephone.

To exchange Internet mail and view home pages on a personal computer, a predetermined setup is required, and this operation is difficult. Since the Internet portable telephone originally has an electronic mail address and has a built-in browser to view home pages, troublesome setup is unnecessary. The feature of the Internet portable telephone is that not only conventional Internet portable telephone services but also Internet portable telephone-supported home pages on the Internet can be viewed at will.

In a message service, desired information is automatically received if registered in the message service of each site. Messages include the requested message, which requires registration in advance, and a free message. Both are automatically received just like receiving electronic mail.

The Internet portable telephone is convenient because various Internet information services can be accessed without using such computer equipment as a personal computer and PDA (Personal Data Assistant: portable information terminal).

### SUMMARY OF THE INVENTION

It is an object of the present invention to provide a client server system which allows easy message exchange between a client, such as a personal computer, and an Internet portable telephone.

A client server system according to the present invention is a client server system comprising a server, a plurality of clients connected to the server via communication lines, and a gateway which converts the information of the server to an interface suitable for the Internet portable telephone, wherein the above mentioned server further comprises a transmission/reception section, an icon transfer section which transfers an icon received by the transmission/reception section to another client, and a screen creation section which receives the icon from the transmission/reception section and creates a message board screen, the above mentioned client further comprises a transmission/reception section, an icon creation section which transmits a transmission icon to the transmission/reception section, and a screen creation section which receives the icon received by the transmission/reception section and/or the icon created by the icon creation section and creates a message board screen, the above mentioned gateway further comprises a conversion section which converts the information received from the server to an interface suitable for the Internet portable telephone and also converts the information received from the Internet portable telephone to an interface suitable for the server, the above mentioned client displays a newly created icon on the message board screen thereof and transmits the icon to the server, the above mentioned server displays the icon on the message board screen thereof and transfers the icon to another client, and the above mentioned gateway receives the icon from the server, executes conversion processing on this icon by the conversion section, then transmits the icon to the Internet portable telephone.

The present invention is a client server system comprising a server, a plurality of clients connected to the server via communication lines, and an image server which stores image data, wherein the above mentioned server further comprises a transmission/reception section, an icon transfer section which transfers an icon received by the transmission/reception section to another client, and a screen creation section which receives the icon from the transmission/reception section and creates a message board screen, the above mentioned client further comprises a transmission/reception section, an icon creation section which transmits a transmission icon to the transmission/reception section, and a screen creation section which receives the icon received by the transmission/reception section and/or the icon created by the icon creation section and creates a message board screen, the above mentioned image server further comprises an image memory which stores image data and an image memory for icons which stores image data converted for icons, the above mentioned client displays a newly created icon on the message board screen thereof and transmits the icon to the server along with image data, the above mentioned server receives and displays the icon on the message board screen thereof, generates a pointer of the image data, transfers the pointer to another client along with the icon, and transmits the image data to the image server, the above mentioned image server stores the image data to the image memory, converts the image data to the image data for icons and stores the data to the image memory for icons, and the above mentioned other client accesses the image server based on the pointer, obtains the image data for icons, and incorporates the image data for icons into the icon.

The present invention is a communication method using a client server system which is comprised of a server, a plurality of clients connected to the server via communication lines and a gateway which converts information of the server to an interface suitable for the Internet portable telephone, wherein the above mentioned server further comprises a transmission/reception section, an icon transfer section which transfers an icon received by the transmission/reception section to another client, and a screen creation section which receives the icon from the transmission/reception section and creates a message board screen, the above mentioned client further comprises a transmission/reception section, an icon creation section which transmits a transmission icon to the transmission/reception section, and a screen creation section which receives the icon received by the transmission/reception section and/or the icon created by the icon creation section and creates a message board screen, and the above mentioned gateway further comprises a conversion section which converts the information received from the server to an interface suitable for the Internet portable telephone, and also converts the information received from the Internet portable telephone to an interface suitable for the server, comprising steps of: the above mentioned client displaying a newly created icon on the message board screen thereof and transmitting the icon to the server; the above mentioned server receiving and displaying the icon on the message board screen thereof, and transferring the icon to another client; and the above mentioned gateway receiving the icon from the server, executing conversion processing on the icon using the conversion section, and transmitting the icon to the Internet portable telephone.

The present invention is a communication method using a client server system which is comprised of a server, a plurality of clients connected to the server via communication lines, and an image server which stores image data, wherein the above mentioned server further comprises a transmission/reception section, an icon transfer section which transfers the icon received by the transmission/reception section to another client, and a screen creation section which receives the icon from the transmission/reception section and creates a message board screen, the above mentioned client further comprises a transmission/reception section, an icon creation section which transmits a transmission icon to the transmission/reception section, and a screen creation section which receives the icon received by the transmission/reception section and/or the icon created by the icon creation section and creates a message board screen, and the above mentioned image server further comprises an image memory which stores image data and an image memory for icons which stores image data converted for icons, comprising steps of: the above mentioned client displaying a newly created icon on the message board screen thereof and transmitting the icon to the server along with image data; the above mentioned server generating a pointer of the image data; the above mentioned server transferring the pointer to another client along with the icon; the above mentioned server transmitting the image data to the image server; the above mentioned image server storing the image data to the image memory, converting the image data to the image data for icons and storing the data to the image memory for icons; the above mentioned other client accessing the image server based on the pointer and obtaining the image data for icons; and the above mentioned other client incorporating the image data for icons to the icon.

### BRIEF DESCRIPTION OF THE DRAWINGS

Fig. 1 is a block diagram depicting the server and the client according to the first embodiment;
Fig. 2 is a block diagram depicting the wireless gateway according to the first embodiment;
Fig. 3 is a conceptual diagram depicting the system of the first embodiment;
Fig. 4 is a diagram depicting the general processing of the system of the first embodiment;
Fig. 5 is a flow chart depicting the processing of the client of the system of the first embodiment;
Fig. 6 is a flow chart depicting the processing of the server of the system of the first embodiment;
Fig. 7 is a flow chart depicting the processing of another client of the system of the first embodiment;
Fig. 8 is a flow chart depicting the security processing of the system of the first embodiment;
Fig. 9 is an example of a display screen of the message board system according to the first embodiment;
Fig. 10 is an example of a display screen of the Internet portable telephone according to the first embodiment;
Fig. 11 is an example of a display screen of the message board system according to the second embodiment;
Fig. 12 is another example of a display screen of the message board system according to the second embodiment;
Fig. 13 is a conceptual diagram depicting the system of the third embodiment;
Fig. 14 is a conceptual diagram depicting another system of the third embodiment;
Fig. 15 is a conceptual diagram depicting the system of the fourth embodiment;
Fig. 16 is a diagram depicting the general processing of the system of the fourth embodiment; and
Fig. 17 is an example of a display screen of the message board system according to the fourth embodiment.

### DESCRIPTION OF THE PREFERRED EMBODIMENTS

### Embodiment 1

The system of this embodiment of the present invention is an icon-driven server/client system for transmitting/receiving messages in real-time. The major difference from conventional systems is that a message can be addressed intuitively and directly by dragging and dropping icons. The system of this embodiment provides a new communication and joint operation for the Internet/intranet community.

This system can be used very easily. The user merely accesses the server, then boards, described later, such as a message board, white board, chess board, and maps and images, can be used any time, and can be used to write a desired message and share this message with others, by dragging and dropping icons on a board, over the Internet.

The features of this system are: easy installation, easy use and easy customization. Also this system is used more easily than any other communication, collaboration and joint operation software, including a message board, labeling software, whiteboard, chat and electronic mail.

To use this system, the server must be a CGI-supported Web server, and Java also must be supported. The client side must be a Java-supported Web browser and must support the virtual machine/run-time environment of Java.

This system has the following major functions.
- Message creation function
   This is a function to create a message to send to a destination. For example, if an icon to transmit a message is clicked, a dialog box is displayed on the screen, and this icon and the message are linked by writing a message in this dialog box. The dialog box may be displayed not only when an icon is clicked, but also when the icon is dragged and dropped.
- Message addressing function
   This is a function to determine the destination to send the message. In conventional electronic mail software, the message destination must be input by characters. In this system, the area on a screen corresponding to each client is defined and controlled, and it is judged which area an icon is dragged and dropped, that is, which destination the message is directed.
- Security function
   This is a function to control access to an icon and/or a message. This function grants permission to read, move, correct or delete an icon and/or a message. For example, anyone can read the message of an icon placed in a public space, but only the specified user can read an icon placed in a private space.
- Broadcast function
   This is a function to send a message to all users, without specifying a specific destination.
- Association function
   This is a function to set a link to related home pages, and to set and display such attributes as emergency, sold out, discount, and new product.

This embodiment will now be described with reference to accompanying drawings.

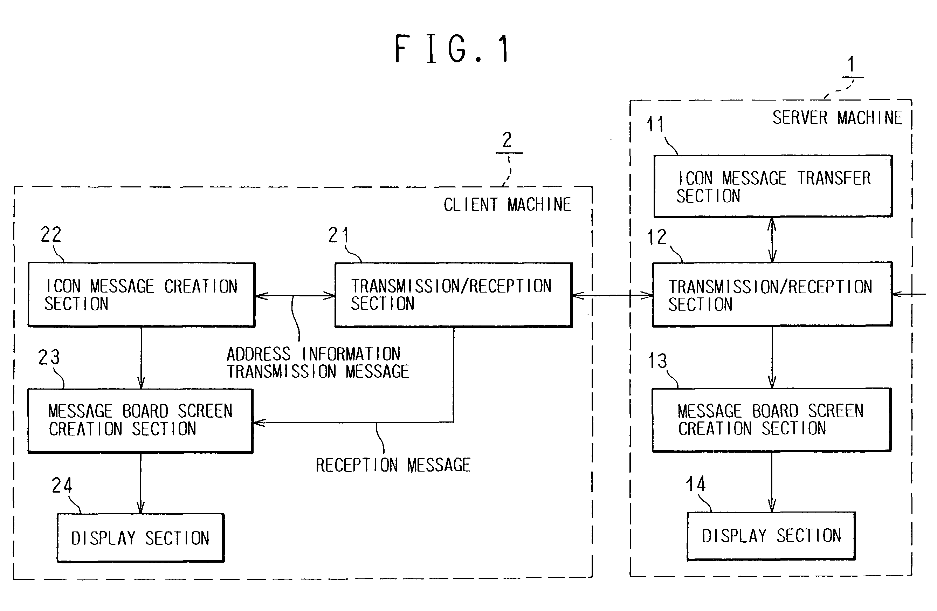

Fig. 1 is a functional block diagram depicting the general configuration of the server machine 1 and the client machine 2 used for this system. The server machine 1 comprises a message transfer section 11 which transfers a received message when necessary, a transmission/reception section 12 for communicating with the client machine, a message board screen creation section 13 which creates a screen of the message board based on the received message, and a display section 14 which receives the output of the screen creation section 13 and displays the screen. The client machine 2 comprises a transmission/reception section 21 for communicating with the server machine, a message creation section 22 which creates a transmission message, a message board screen creation section 23 which receives the transmission message from the message creation section 22, receives the reception message from the transmission/reception section 21, and displays these messages on the message board, and a display section 24 which receives the output of the screen creation section 23 and displays it on the screen.

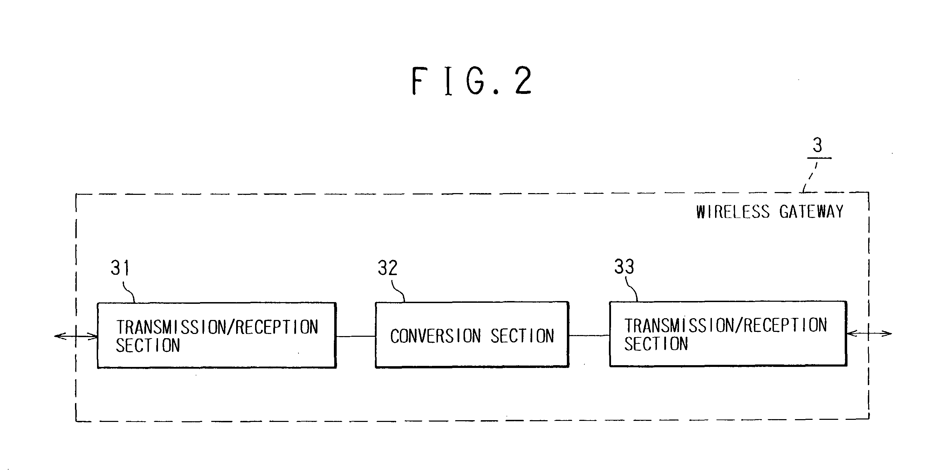

Fig. 2 is a functional block diagram of a wireless gateway 3 which performs 2-way conversion of the interface for a personal computer and the interface for the Internet portable telephone to be used for this system. The wireless gateway is an interface conversion device for the Internet portable telephone which performs wireless communication. This device comprises a transmission/reception section 31 for communicating with the server machine 1, a transmission/reception section 33 for communicating with the protocol conversion server of the communication carrier, and a conversion section 32 which performs 2-way conversion of the interface for a personal computer and the interface for the Internet portable telephone. The conversion section 32 converts the display screen interface for a personal computer to the interface for the Internet portable telephone or vice versa. Compared with the display capability of the personal computer, the display capability of the Internet portable telephone is much less, so necessary information is processed according to the display capability of the Internet portable telephone. For example, the graphic displays of "rice ball icon" and "sandwich icon" are replaced with the characters "rice ball" and "sandwich". Therefore the wireless gateway 3 comprises a data base, which is not illustrated, for storing information on the correspondence between graphics and characters. Or this data on correspondence is received from the server 1. Another example is that the current position displayed on a map is converted to longitude/latitude information and/or the address display information by characters. In this case, a database for storing the correspondence between positions on maps, and longitude/latitude information and/or address display information is provided in advance.

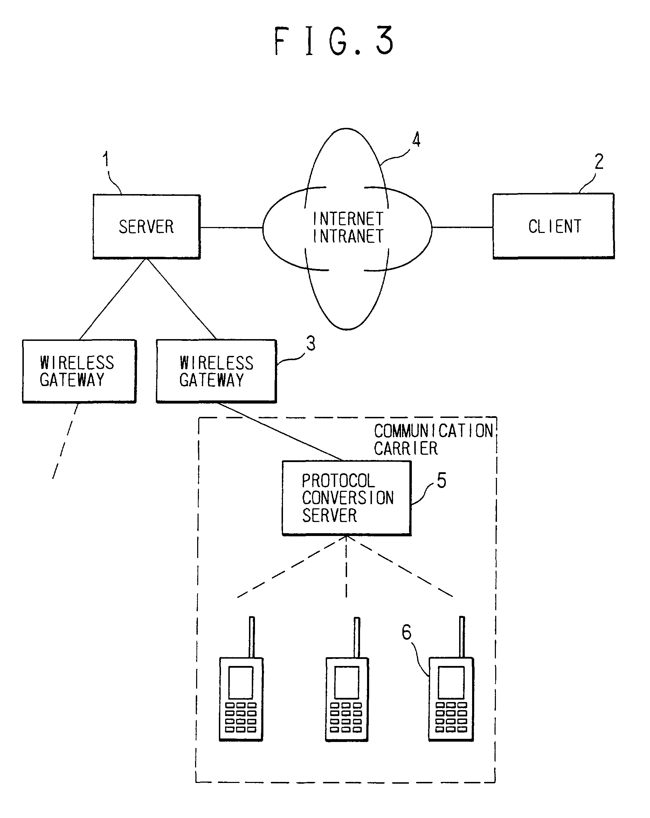

Fig. 3 is a conceptual diagram depicting the general configuration of this system. The client 2 can access the server 1 via the Internet/intranet 4. The server 1 stores the application software (Java applet) for this system in the external memory in advance. When the client accesses the server, the application software for the client is downloaded and this system becomes available. The Internet portable telephone 6 (or beeper), on the other hand, accesses the wireless gateway 3 via the protocol conversion server 5, which is equipment of the communication carrier, and also accesses the server 1.

A method of accessing content on the Internet from each portable telephone ( including PHS) will now be briefly described.

At the moment, the following four types of methods are used. All of these services are accessed by HTTP on the Internet, but information sent via HTTP is described differently.
(1) [i-Mode system] described in i-Mode supported HTML
(2) [J-SkyWeb system] described in J-SkyWeb supported HTML
(3) [WAP/HDML system] described in HDML
(4) [P mail DX system] described in P mail DX text

The i-Mode system and the J-SkyWeb system can be described in HTML just like a regular web page, but the type of tags used in HTML are limited. Therefore the web page described in these systems can be accessed by the browser running on a regular personal computer. The WAP/HDML system and P mail DX system are similar to HTML since tags are embedded in the text, but uses a unique description method designed especially for portable telephone services.

All the above four systems can implement the text-based message system of the present embodiment since these systems can use HTTP as the transfer protocol (that is, service can be provided by Java Servlets), and have little difference in functions.

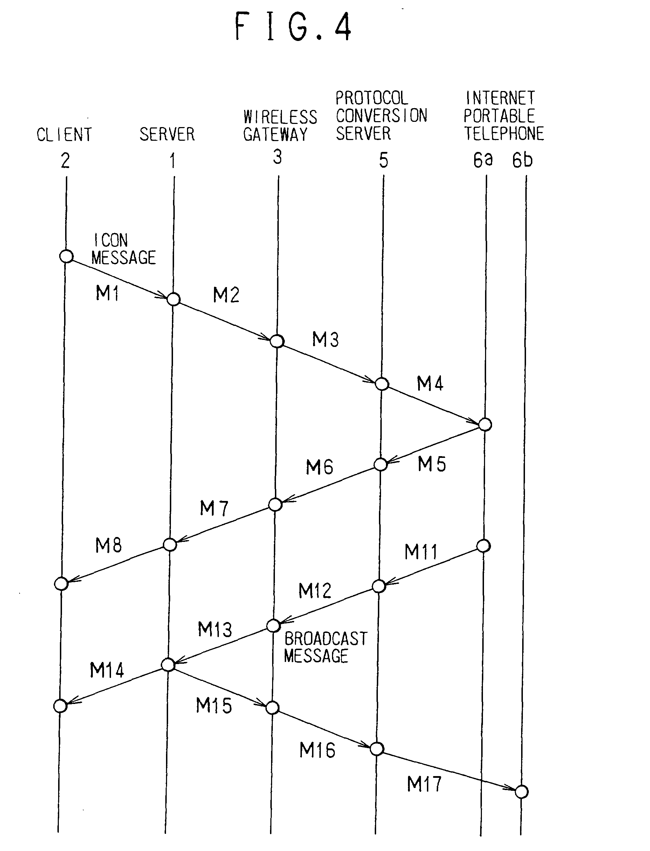

Fig. 4 shows an exchange of messages between the server 1, the client 2 and the Internet portable telephones 6a and 6b. When the client 2 creates a message, the message M1 is transmitted to the server 1, and is also displayed on the self screen. The server 1 identifies the destination of the received message M1, and transmits it to the destination-Internet portable telephone 6a (M2 to M4). When the Internet portable telephone 6a creates a reply message, the replay message is transmitted to the client 2 (M5 to M8). If the message is a broadcast message, the message M11, transmitted from the Internet portable telephone 6a, is also transmitted to all the other clients 2 and 6b (M12 to M17). In this way, message communication via the server 1 is possible among all the clients 2 and 6a and 6b.

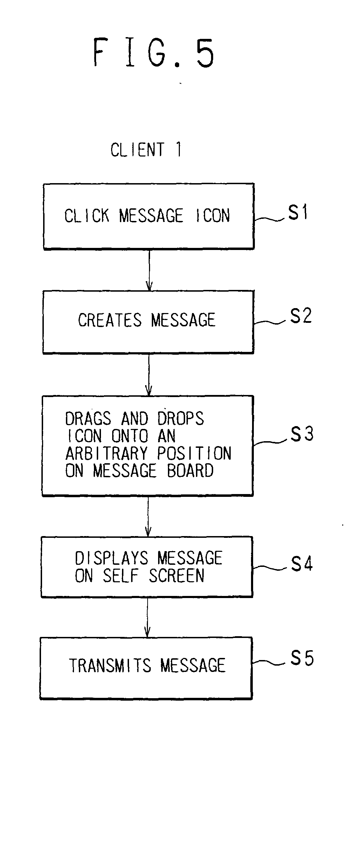

Fig. 5 shows the processing flow in the client 2 which transmits a message. When the user clicks a message icon (S1), a message creation dialog is displayed. The user can create an arbitrary message here (S2). The user drags and drops the icon on to an arbitrary position of the message board (S3). The message can be transmitted by this operation. The client displays the message on the self screen (S4), and also transmits the message (S5).

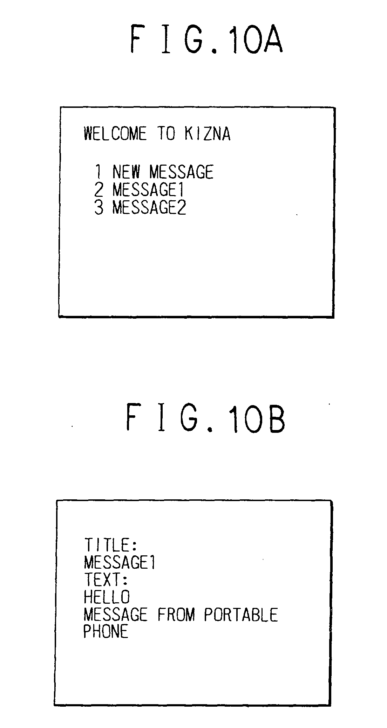

The screens shown in Fig. 10 (a) and (b), for example, are displayed on the display screen of the Internet portable telephone 6. Fig. 10 (a) shows a screen when the user has accessed the server 1. The menu 1 is for creating a new message to transmit. The menus 2 and 3 are for reading the message 1 or 2, which is addressed to the user or is for broadcasting. Fig. 10 (b) shows a screen when the menu 1 is selected and the message 1 is displayed.

The processing flow in the Internet portable telephone 6 will now be described with reference to the flow chart in Fig. 5. At first, the user selects menu 1 "new message" (S1), then the message creation dialog is displayed. The user can create an arbitrary message here (S2). The user specifies the transmission destination of the created message (S3). At this time, the message can be transmitted without any relationship to an existent message, or can be transmitted in association with an existent message (e.g. as a reply to a message). The Internet portable telephone 6 displays a message on the self screen (S4), and also transmits the message (S5).

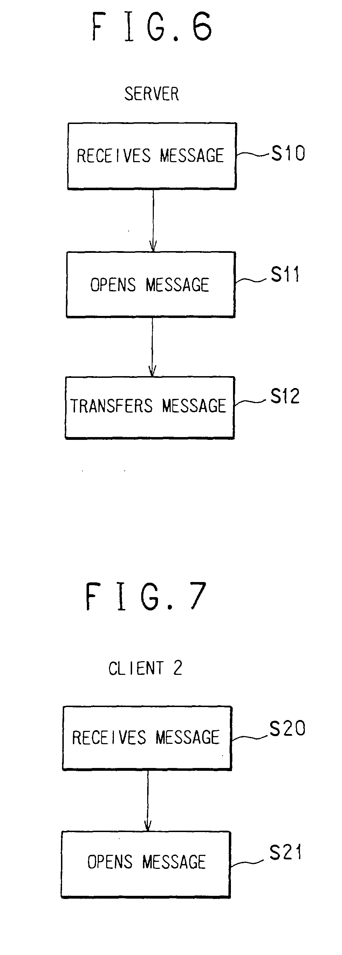

Fig. 6 shows a processing flow in the server. When the server receives a message (S10), the server opens the message (S11), and stores it to the self memory. And the server transfers the message to a predetermined destination (S12).

Fig. 7 shows a processing flow in the client which receives a message. When the client receives a message from the server (S20), the client opens the message (S21), and displays the message on the message board thereof. In the screen in Fig. 10, for example, the Internet portable telephone 6 creates a new menu 4 and displays the menu.

By the processings in Fig. 5 to Fig. 7, the message written to a client is immediately reflected on the screens of the other clients. In this way, the transmission/reception of a message between arbitrary clients can be synchronously known in real-time. Management is easy since all the information is collected in the server.

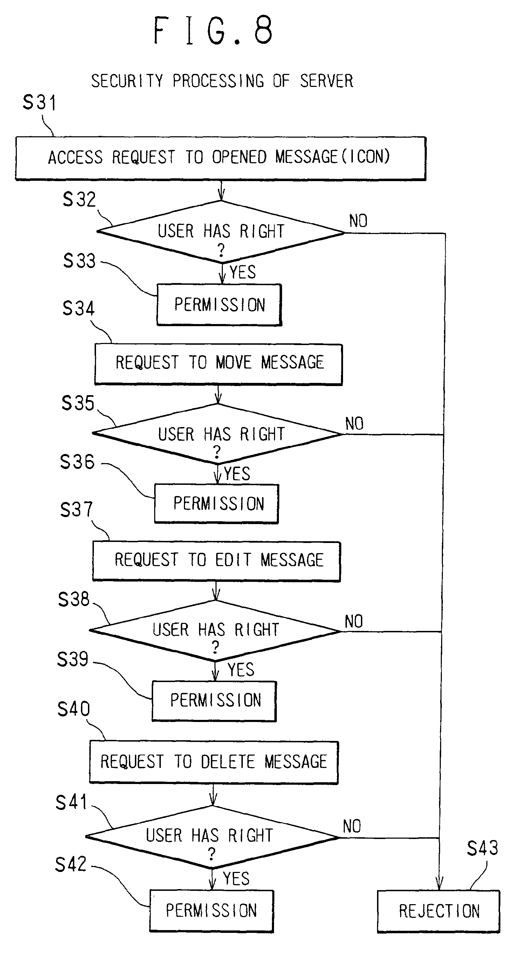

Fig. 8 shows a security processing flow of the server. When an access request for an opened message (icon) is received (S31), the server checks whether the requesting user has the right (S32), permits access if the user has the right (S33), and rejects the request if not (S43). Similar processing is also executed when moving a message (that is, changing the transmission destination address), editing a message, and deleting a message are requested (S34 - S42). For example, if this system is a bulletin board which anyone can access, accessing and moving are permitted to anyone. But editing and deleting are permitted only to the user who transmitted the message or to the administrator.

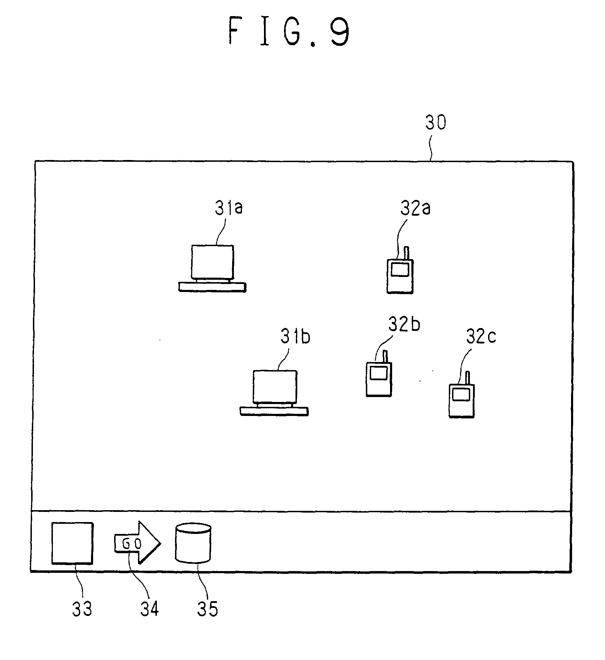

Fig. 9 shows an example of a message board screen of this system. The message board 30 and examples of the message, 31 and 32, to be displayed here, are displayed on the screen. The icons 33, 34 and 35 at the bottom of the screen are a message creation icon 33, GO icon 34, which creating a link to a related home page, and a trash can icon 35, which deletes a message respectively. The icons 31a and 31b indicate messages from clients of a personal computer, and icons 32a and 32c are messages from Internet portable telephones. By changing the type of icon, a message from a personal computer client and a message from an Internet portable telephone can be easily identified on the message board 30. The server 1 selects a type of icon by checking whether the message is from the wireless gateway 3.

Based on this drawing, the operation method of this system will be described. To transmit a message, the icon 33 is clicked and a message is created. And the icon 33 is dragged and dropped on to an arbitrary position of the message board 30. Then the message is opened and can be read as seen in 31 and 32. The status of this screen is the same for all clients, as the flow in Fig. 4 shows. Therefore, the user can read all the messages on the screen on the self client machine. Unlike the broadcasting of conventional electronic mail, this system can send a message to all participant users without specifying destinations. Also, operation using icons is very intuitive and easy to understand, and is very easy to use.

The case of the Internet portable telephone will now be described. When the Internet portable telephone 6 accesses the server 1 via the protocol conversion server 5 and the wireless gateway 4, the screen shown in Fig. 10 (a), for example, is displayed, where messages on the message board can be known. The user can read any message in a range permitted by the terms of security.

Security problems are not a very serious issue on this message board. Here any user can create, paste or delete a message. Of course the level of security can be increased so that only a specified individual (e.g. administrator) can move and delete a message (see Fig. 8).

### Embodiment 2

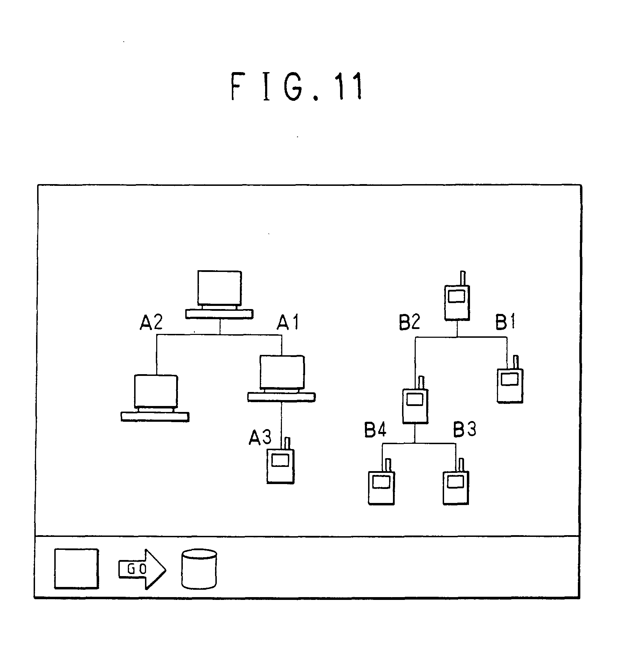

The relationship between messages may be indicated on the message board. For example, as Fig. 11 shows, lines are drawn between the response to a message, and a plurality of related messages are displayed as a group. Also, as Fig. 11 shows, symbols A1, A2, ... may be added to the branches of a message. By referring to these symbols, a desired message can be directly opened. Such a reference method is particularly useful with the Internet portable telephone. On the display of the Internet portable telephone, messages are displayed in a hierarchical structure, where it takes time to reach the message to be read if the message is deep in the hierarchy. If reference symbols are added, as shown in Fig. 11, then the message can be directly selected and read using a symbol as a search key.

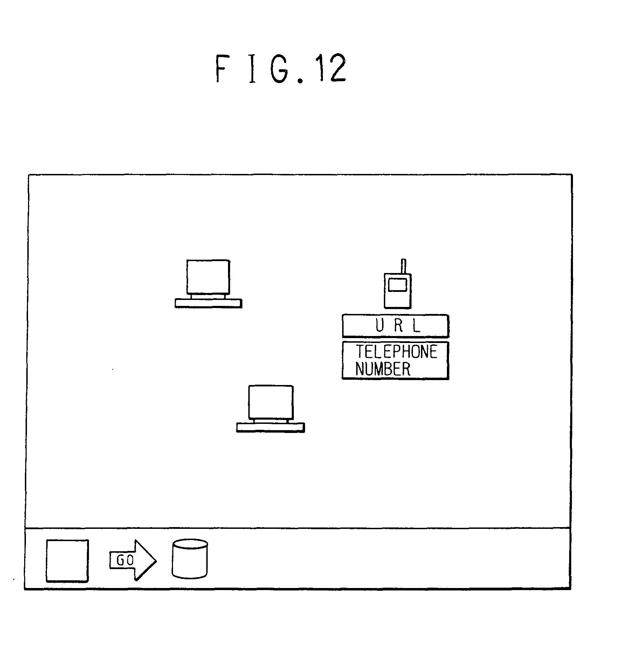

Also the URL or telephone number of the user who transmitted the message may be displayed with the icon of the message, as Fig. 12 shows. By this display, the user who transmitted of the message can be specified. The telephone call may be made to the telephone number by double clicking the icon.

### Embodiment 3

The above description concerned the message system, but the present invention may be applied to a system which includes the Internet portable telephone. By the server 1 and the wireless gateway 3, data format conversion, real-time update control of messages and data exchange with another database are possible, among not only a server and clients connected to the Internet but also with Internet portable telephones. Using this function, various applications can be provided. For example, a communication board for text messages and image messages, such games as character development games, match games (Igo, Shogi), and such local information services as convenience store special sale information and cosmetics special sale information, can be provided.

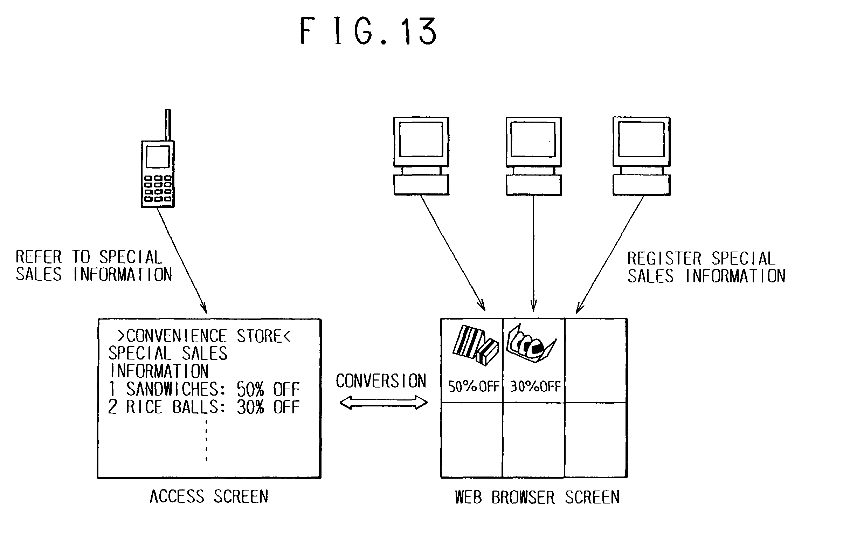

Fig. 13 is an example of a local information service according to embodiment 3. The client 2 at the store accesses the special sale information board on the server 1, and writes the special sales information. Then such information as "sandwiches: 50% off" or "rice balls: 30% off" is displayed on the web browser screen. By this, information can be transmitted in real-time. The web browser screen is converted to the display format of the Internet portable telephone by the wireless gateway 3. The user accesses the content of the special sales information and refers to the special sales information by the Internet portable telephone. At this time, the areas which can be accessed may be limited in order to obtain information on the closest location all the time. On the display screen of the Internet portable telephone, such information as "xxx store special sales information" , "sandwiches: 50% off" or "rice balls: 30% off" is displayed.

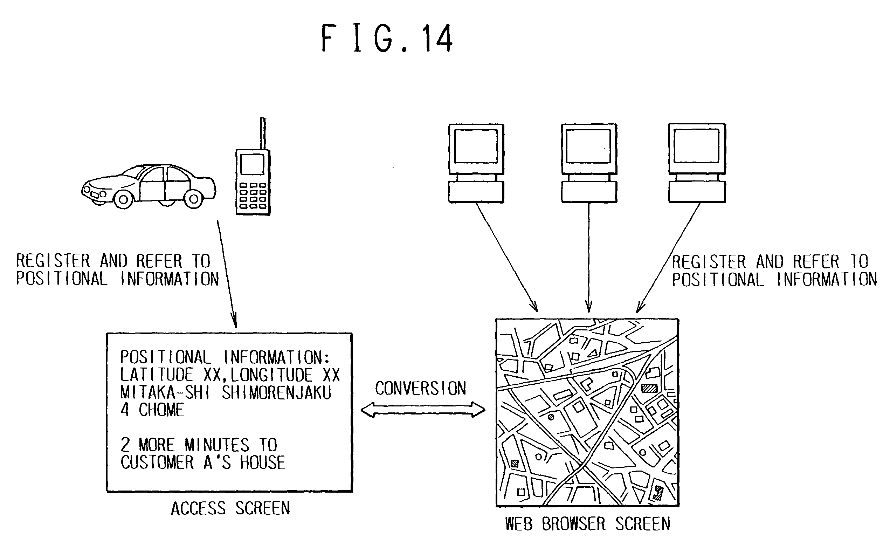

Fig. 14 is an example of a communication board with positional information management functions in accordance with the third embodiment. The client 2 accesses the map and positional information board on the server 1, and writes or refers to a message and image. Then the positional information on the map is displayed on the web browser screen. The web browser screen is converted to the display format of the Internet portable telephone by the wireless gateway 3. Since the Internet portable telephone cannot handle image information very well, the wireless gateway 3 converts the positional information on the screen to longitude/latitude and/or address information by characters. The Internet portable telephone refers to this information.

Various other applications are possible. This invention allows a message exchange between the Internet portable telephone and a regular personal computer via the Internet. Also according to the present invention, messages can be easily exchanged among a plurality of users, unlike conventional electronic mail. This is possible because the present invention comprises the server 1 and the wireless gateway 3.

### Embodiment 4

In the present system/method described above, an image prepared by the user can be included in the icon. The system/method for this will now be described.

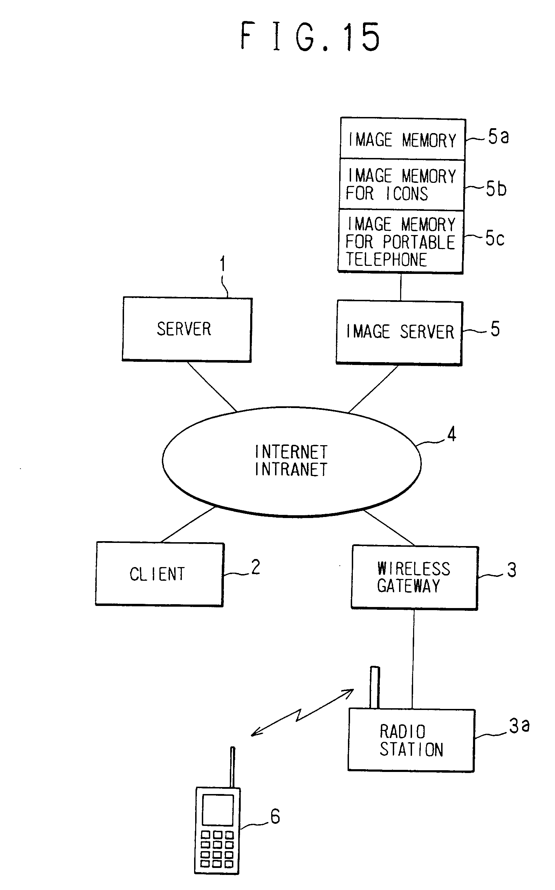

Fig. 15 is a block diagram depicting a system in accordance with the fourth embodiment. Fig. 15 corresponds to Fig. 3, which was described above. In Fig. 15, the system further comprises the image server 5 and the image memory 5a, the image memory icons 5b, and the image memory for portable telephone 5c, which are connected to the image server 5. The image server 5 receives image data along with a message or by itself from the client 2, and stores this image data to the image memory 5a. The image server 5 converts the received image data to the image for icons and the image for a portable telephone, and stores these to the image memory for icons 5b and memory for a portable telephone 5c respectively.

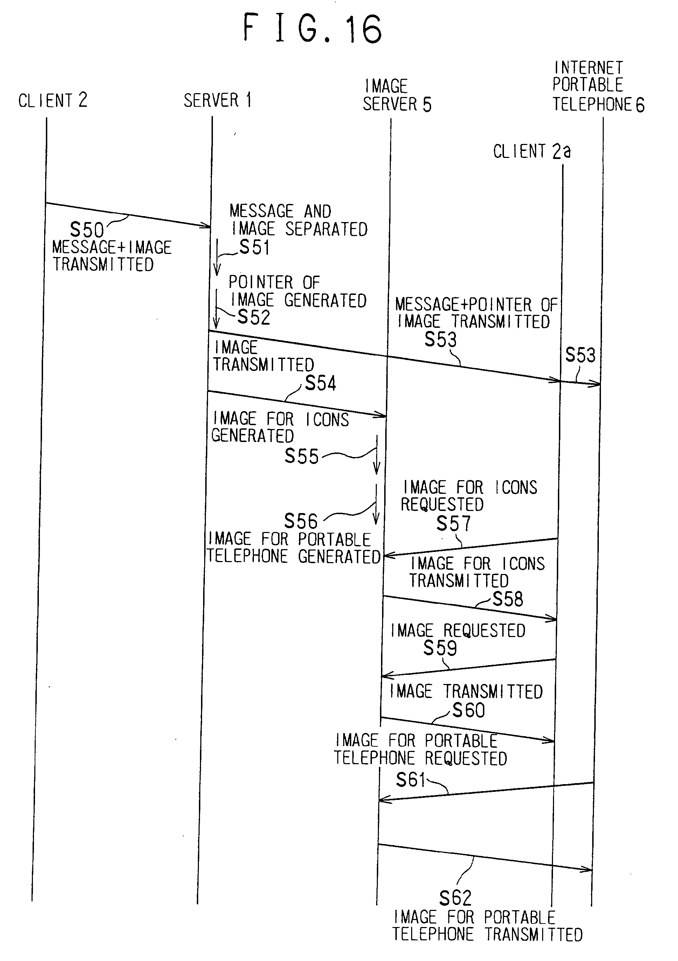

The processing procedure of the system/method according to the fourth embodiment will now be described with reference to the flow chart in Fig. 16.

A message and image data are transmitted from the client 2 to the server 1 (S50). In the server 1, the message and image data are separated (S51). The separated message is distributed to each client, as described above (see Fig. 4). In the present embodiment, however, not only the message but also the image data and/or the pointer (e.g. URL), which indicates the position of the image for icons and the image for a portable telephone on the network, are transmitted to each client. In other words, the pointer of the image is generated (S52), and the message and the pointer of the image are transmitted to the client 2a and the Internet portable telephone 6 (S53). It is predetermined that the image data will be stored to the image server 5, and the pointer is the URL of the image server 5. The image data is specified by the name or address of the transmitter or title, so the URL includes the name and address of the transmitter and title, for example. The pointer of the image includes information indicating the storage location of the original image, information indicating the storage location of the image for icons, and information indicating the storage location of the image for a portable telephone. This information is not always transmitted together. For example, only the storage location of the image for a portable telephone may be transmitted to a portable telephone.

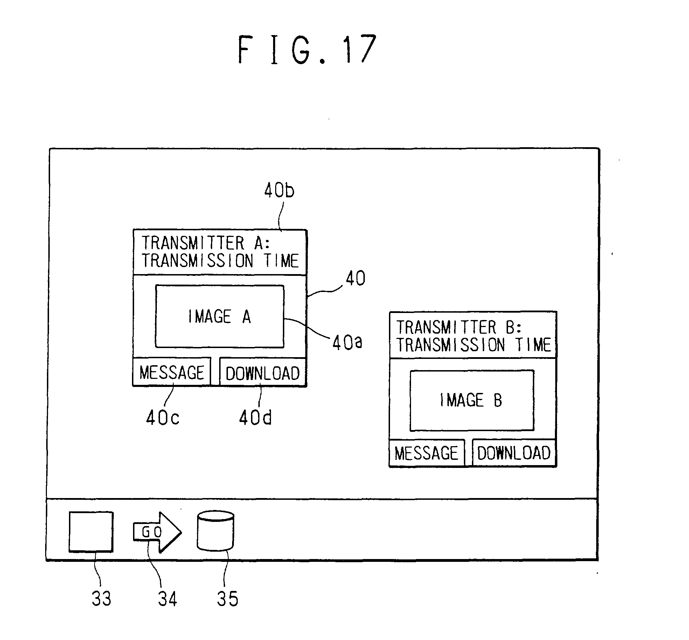

The image data is transmitted from the server 1 to the image server 5 (S54). The image server 5 stores the received image data to the image memory 5a, generates the image data for the icons and image data for a portable telephone from the received image data (S55, S56), and stores the image data to the image memory for icons 5b and the image memory for a portable telephone 5c respectively. The image data for icons is incorporated into the icon 40 of the message, as shown in Fig. 17. The image for icons is generally smaller than the original message. So it is preferable to decrease the size of the original image data by lowering the resolution of the data and increasing the compression rate of image compression. The size (number of pixels) of the image data for icons is determined depending on the relationship between the size of the icon displayed on the screen and the display capability of the screen. The image data for a portable telephone is generally smaller than the original image as well. So, just like the case of icons, the size of the data is decreased. The size (number of pixels) of the image data for a portable telephone is determined depending on the display capability of the screen of the portable telephone. Also, depending on the color display capability of the screen of the portable telephone, the color data of the image is compressed. For example, if the screen of the portable telephone is monochrome, color information is unnecessary.

When the message and the pointer of the image are transmitted to the client 2a, the client 2a requests the image for icons to the image server 5 (S57). The client 2a accesses the image server 5 using the pointer of the image received in S53. Then the image server 5 transmits the image for icons to the client 2a (S58). And the client 2a incorporates the received image for icons to the icon 40.

To obtain the original image, the user clicks on the "Download" button shown in Fig. 17. Then the client 2a transmits the image request to the image server 5 (S59), and the image server 5 transmits the original image to the client 2a (S60). And the client 2a displays the received image and stores the image to the local hard disk.

When the message and the image pointer are displayed on the Internet portable telephone 6, the Internet portable telephone 6 requests the image for portable telephone to the image server 5 (S61). The image server 5 transmits the image for portable telephone to the Internet portable telephone 6 (S62). Then the Internet portable telephone 6 displays the received image on its screen.

Fig. 17 shows an example of the screen of the client 2 in the fourth embodiment. The icon 40 of the message is displayed, where the icon 40 includes the image 40a, and also includes the display 40b to identify the transmitter, a message button 40c and the download button 40d. The message can be received by clicking the message button 40c. The original image can be downloaded by clicking the download button 40d.

The message transmission procedure will now be briefly described. At first themessage creation icon 33 is clicked. Then the dialog box for inputting an image is displayed, and the message is input there. To transmit an image, the image button is clicked in order to display the dialog box for inputting an image. The image file is selected in this dialog box. When the dialog box is closed, the icon is displayed, so this icon is dragged and dropped onto a predetermined location. The image included in the icon may be created by the client 2, who is the transmitter, or may be obtained from the image server 5 using the image pointer received from the server 1.

According to the system/method of the fourth embodiment of the present invention, an image can be transmitted along with a message. Since the image to be transmitted is included in the icon, the receiver can know the content intuitively. Unlike conventional electronic mail, messages can be easily exchanged among a plurality of users. Operation is also easy by using a drag and drop operation of icons.

The present invention is not restricted to the above embodiments; and various modifications are possible within a scope of the invention stated in the Claims, and, needless to say, these variant forms are included in the scope of the present invention.

In this description, means does not always mean a physical means, but includes the case when the functions of each means are implemented by software. The functions of a means may be implemented by two or more physical means, or the functions of two or more means may be implemented by one physical means.

## Claims

1. A client server system comprising a server, a plurality of clients connected to said server via communication lines, and a gateway which converts the information of said server to an interface suitable for the Internet portable telephone, wherein:
said server comprises a transmission/reception section, an icon transfer section which transfers an icon received by said transmission/reception section to another client, and a screen creation section which receives the icon from said transmission/reception section and creates a message board screen;
said client comprises a transmission/reception section, an icon creation section which transmits a transmission icon to said transmission/reception section, and a screen creation section which receives the icon created by said transmission/reception section and/or the icon created by said icon creation section and creates a message board screen;
said gateway comprises a conversion section which converts the information received from said server to an interface suitable for said Internet portable telephone and also converts the information received from said Internet portable telephone to an interface suitable for said server;
said client displays a newly created icon on the message board screen thereof and transmits said icon to said server, said server receives and displays said icon on the message board screen thereof and transfer said icon to another client; and
said gateway receives said icon from said server, executes conversion processing on this icon by said conversion section, and transmits said icon to said Internet portable telephone.

2. The client server system according to Claim 1, wherein said gateway further comprises a database to store information on the corresponding relationship between graphics and characters, and said conversion section converts the graphic information to character information referring to said database.

3. The client server system according to Claim 1, wherein:
said gateway comprises a database to store the corresponding relationship between positions on a map and the longitude/latitude information and/or address display information; and
said conversion section converts said icon displayed on the map to longitude/latitude information and/or address display information by characters referring to said database.

4. The client server system according to Claim 1, wherein when a received icon is a response message, said server links said icon with another icon to display, and adds a code to identify the relationship, and said Internet portable telephone directly refers to the message by said code.

5. The client server system according to Claim 4, wherein when there are a plurality of icons, said client displays said icons in a tree format.

6. The client server system according to Claim 1, wherein when the received icon is from said Internet portable telephone, said server displays the telephone number of said Internet portable telephone on said icon.

7. The client server system according to Claim 6, wherein when a predetermined operation is executed on said icon, said client makes a phone call to said corresponding Internet portable telephone.

8. A client server system comprising a server, a plurality of clients connected to said server via communication lines, and an image server which stores image data, wherein:
said server comprises a transmission/reception section, an icon transfer section which transfers an icon received by said transmission/reception section to another client, and a screen creation section which receives the icon from said transmission/reception section and creates a message board screen;
said client comprises a transmission/reception section, an icon creation section which transmits a transmission icon to said transmission/reception section, and a screen creation section which receives the icon received by said transmission/reception section and/or the icon created by said icon creation section and creates a message board screen;
said image server comprises an image memory which stores image data and an image memory for icons which stores image data converted for icons;
said client displays a newly created icon on the message board screen thereof and transmits said icon to said server along with image data;
said server receives and displays said icon on the self message board, generates a pointer of said image data, transfers said pointer to another client along with said icon, and transmits said image data to said image server;
said image server stores said image data to said image memory, converts said image data to the image data for icons and stores the data to said image memory for icons; and
said other client accesses said image server based on said pointer, obtains said image data for icons, and incorporates said image data for icons into said icon.

9. The client server system according to Claim 8, wherein said other client accesses the image server based on said pointer and obtains said image data.

10. The client server system according to Claim 8, further comprising a gateway which converts information of said server to an interface suitable for an Internet portable telephone, wherein:
said gateway comprises a conversion section which converts the information received from said server to an interface suitable for said Internet portable telephone, and converts the information received from said Internet portable telephone to an interface suitable for said server;
said image server comprises an image memory for portable telephones which stores image data for portable telephones, said server transfers said pointer to said Internet portable telephone along with said icon;
said image server converts said image data to image data for portable telephones and stores the data to said image memory for portable telephones; and
said Internet portable telephone accesses said image server based on said pointer and obtains said image data for portable telephones.

11. The client server system according to Claim 8, wherein the pointer of the image includes at least one information item from among information to indicate the storage location of the original image, information to indicate the storage location of the image for icons, and information to indicate the storage location of the image for portable telephones.

12. A communication method using a client server system which is comprised of a server, a plurality of clients connected to said server via communication lines, and a gateway which converts information of said server to an interface suitable for an Internet portable telephone, wherein:
said server comprises a transmission/reception section, an icon transfer section which transfers an icon received by said transmission/reception section to another client, and a screen creation section which receives the icon from said transmission/reception section and creates a message board screen;
said client comprises a transmission/reception section, an icon creation section which transmits a transmission icon to said transmission/reception section, and a screen creation section which receives the icon received by said transmission/reception section and/or the icon created by said icon creation section and creates a message board screen; and
said gateway comprises a conversion section which converts the information received from said server to an interface suitable for said Internet portable telephone, and also converts the information received from said Internet portable telephone to an interface suitable for said server;
said communication method comprising steps of:
said client displaying a newly created icon on the message board screen thereof and transmitting said icon to said server;
said server receiving said icon, displaying the icon on the message board screen thereof, and transferring said icon to another client; and
said gateway receiving said icon from said server, executing conversion processing on the icon using said conversion section, and transmitting the icon to said Internet portable telephone.

13. The communication method using the client server system according to Claim 12, further comprising a step of limiting the content which said Internet portable telephone can access based on the position of said Internet portable telephone when said Internet portable telephone accesses said server.

14. The communication method using the client server system according to Claim 13, further comprising a step of accessing content corresponding to the closest position based on the position of said Internet portable telephone when said Internet portable telephone accesses said server.

15. A communication method using a client server system which is comprised of a server, a plurality of clients connected to said server via communication lines, and an image server which stores image data, wherein:
said server comprises a transmission/reception section, an icon transfer section which transfers the icon received by said transmission/reception section to another client, and a screen creation section which receives the icon from said transmission/reception section and creates a message board screen;
said client comprises a transmission/reception section, an icon creation section which transmits a transmission icon to said transmission/reception section, and a screen creation section which receives the icon received by said transmission/reception section and/or the icon created by said icon creation section and creates a message board screen; and
said image server comprises an image memory which stores image data and an image memory for icons which stores image data converted for icons;
said communication method comprising steps of:
said client displaying a newly created icon on the message board screen thereof and transmitting said icon to said server along with image data;
said server generating a pointer of said image data; said server transferring said pointer to another client along with said icon; said server transmitting said image data to said image server; said image server storing said image data to said image memory, converting said image data to image data for icons and storing the data to said image memory for icons;
said other client accessing said image server based on said pointer and obtaining said image data for icons; and
said other client incorporating said image data for icons to said icon.

16. The communication method using the client server system according to Claim 15, wherein:
said client server system comprises a gateway which converts the information of said server to an interface suitable for an Internet portable telephone;
said gateway comprises a conversion section which converts the information received from said server to an interface suitable for said Internet portable telephone, and converts the information received from said Internet portable telephone to an interface suitable for said server; and
said image server comprises an image memory for portable telephones which stores image data for portable telephones;
said communication method comprising steps of:
said server transferring said pointer to said Internet portable telephone along with said icon;
said image server converting said image data to the image data for portable telephones and storing the data to said image memory for portable telephones; and
said Internet portable telephone accessing said image server based on said pointer and obtaining said image data for portable telephones.

17. A computer program comprising computer code means adapted to perform the steps of a communication method according to any of claims 12 to 16.
